# EUROPEAN PATENT SPECIFICATION

(11) **EP 2 272 325 B1**
(45) Date of publication and mention of the grant of the patent: **15.04.2015**
(21) Application number: 09012711.9
(22) Date of filing: 07.10.2009
(51) Int. Cl.: A01G 9/24

(54) **Solar energy greenhouse**
Solarenergie-Treibhaus
Serre à énergie solaire

(30) Priority: 10.07.2009 TW 98123407
(43) Date of publication of application: 12.01.2011
(73) Proprietor: Lite-On Green Technologies, Inc., Neihu Taipei City (TW)
(72) Inventor: Chuang, Mei-Chen, Sindian City Taipei County (TW); Chung, Cheng, Bade City Taoyuan County (TW); Hsiao, Ming-Chao, Jhudong Township Hsinchu County (TW)
(74) Representative: Schmid, Nils T.F.

(56) References cited:
- EP-A1- 1 688 033
- WO-A1-2008/009916

## Description

### BACKGROUND OF THE INVENTION

### 1. Field of the Invention

The present invention relates to a solar energy greenhouse, and more particularly to a solar energy greenhouse which has thin-film solar cell assemblies with unequal gap.

### 2. Description of Related Art

Greenhouses are one kind of building specially for planting plants ("such as flowers, grass, vegetables, fruit and so on), which can protect plants from being affected by climates, temperature or mosquitoes, so that plants can grow successfully and quickly. In particular, in some tropical regions or frigid regions, proper temperature and humidity environments provided by greenhouses can promote growth of plants significantly.

Generally, greenhouses have transparent roofs so that sunlight can radiate on plants through the roofs and the plants can photosynthesize. Greenhouses often also have some air-conditioning equipments for controlling temperature and humidity and so on, which ensure that the temperature and humidity in the greenhouse is beneficial to growth of plants. Greenhouses further have auto-watering equipments for watering plants regularly.

Because of these equipments, greenhouses consume a large mount of electrical energy, which causes electric costs to become a significant burden of users (such as farmers) who are using the greenhouses. Accordingly, it has been proposed that transparent thin-film solar cells may be mounted in positions of the greenhouses where light radiation is the strongest and the most sufficient generally this will be on roofs) to provide electrical energy without affecting distribution of light radiation on plants.

A building component with solar cells is known from WO 2008/009916 A1. EP 1 688 033 Al discloses a cover element for greenhouses.

However, though the thin-film solar cells maybe generally transparent in their characteristics, they still block or absorb sunlight to a potentially significant, which may affect growth of plants in some areas without sufficient sunlight radiation.

Hence, the inventors of the present invention believe that the shortcomings described above are able to be improved and propose the present invention which is of a reasonable design and is an effective improvement based on deep research and thought.

### SUMMARY OF THE INVENTION

A main object of the present invention is to provide a solar energy greenhouse which ensures that enough light enters the greenhouse according to proper distribution of thin-film solar cell assemblies so that the greenhouse can provide better rates of growth of plants within the greenhouse.

To achieve the above-mentioned object, a solar energy greenhouse in accordance with the present invention is provided. The solar energy greenhouse includes a main structure, a roof structure, disposed on the main structure; and a plurality of thin-film solar cell assemblies, disposed on the roof structure in an unequal gap defined there between.

The efficacy of the present invention is as follows: the thin-film solar cell assemblies can absorb sunlight and generate electrical energy for the electronic equipments of the solar energy greenhouse. Further, the distribution of the thin-film solar cell assemblies is determined from the radiation angle of the sunlight and the position of the plants in the solar energy greenhouse, that is, based on the unequal gaps between the thin-film solar cell assemblies, the sunlight is transmitted into the solar energy greenhouse directly through the unequal gaps so as to provide sufficient light quantity, thereby improving the rates of growth of the plants.

To further understand features and technical contents of the present invention, please refer to the following detailed description and drawings related to the present invention. It is understood, however, that the drawings are only provided for convenience and understanding as references and for explanation without limiting the present invention.

### BRIEF DESCRIPTION OF THE DRAWINGS

Fig. 1 is a perspective schematic view of a solar energy greenhouse of a first preferred embodiment of the present invention;

Fig. 2 is a planar schematic view of the solar energy greenhouse of the first preferred embodiment of the present invention;

Fig. 3 is another planar schematic view of the solar energy greenhouse of the first preferred embodiment of the present invention;

Fig. 4 is another planar schematic view of the solar energy greenhouse of the first preferred embodiment of the present invention;

Fig. 5 is a perspective schematic view of a solar energy greenhouse of a second preferred embodiment of the present invention;

Fig. 6 is a perspective schematic view of a solar energy greenhouse of a third preferred embodiment of the present invention;

Fig. 7 is a perspective schematic view of a solar energy greenhouse of a fourth preferred embodiment of the present invention; and

Fig. 8 is a planar schematic view of a solar energy greenhouse of a fifth preferred embodiment of the present invention.

### DETAILED DESCRIPTION OF THE PREFERRED EMBODIMENTS

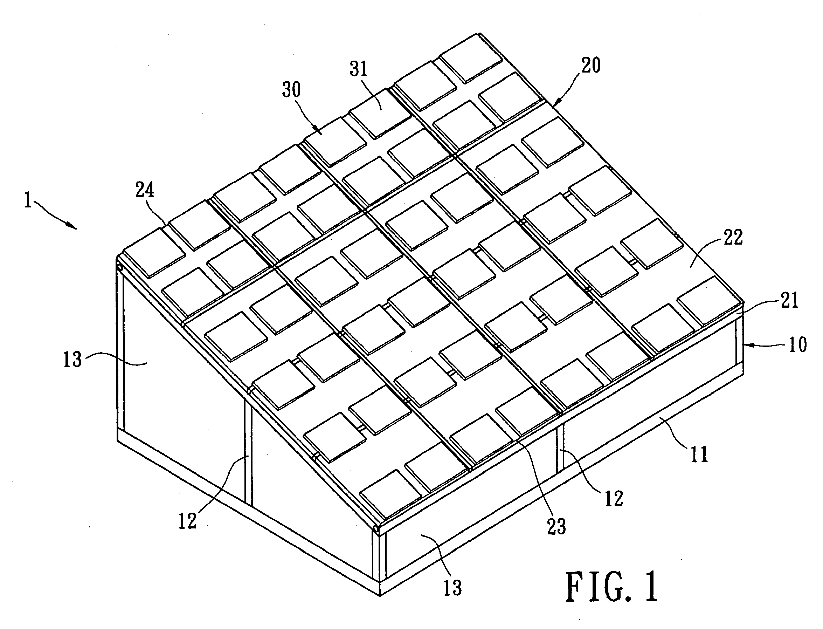

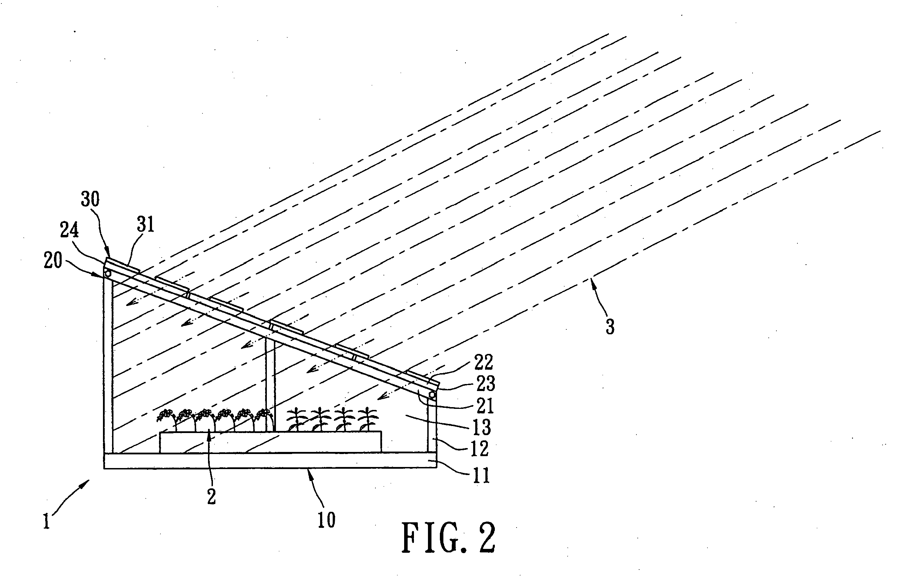

The present invention provides a solar energy greenhouse which has many kinds of preferred embodiments. Please refer to Fig. 1 and Fig. 2 illustrating a first preferred embodiment of the solar energy greenhouse 1 according to the present invention. The solar energy greenhouse 1 includes a main structure 10, a roof structure 20 and a plurality of thin-film solar cell assemblies 30. Gaps between the thin-film solar cell assemblies 30 are unequal. From the positions of the unequal gaps between the thin-film solar cell assemblies 30, transparent materials (transparent boards as shown in Fig. 1) can be observed.

In short, in the solar energy greenhouse 1 of the present invention, in order to provide enough light for plants 2 shown in Fig. 2, the distribution of the thin-film solar cell assemblies 30 is determined from the radiation angle of sunlight 3 and the position of plants 2 within the solar energy greenhouse 1. That is, based on the unequal gaps between the thin-film solar cell assemblies 30, the sunlight 3 can be directly transmitted into the solar energy greenhouse 1 through the above-mentioned unequal gaps to offset the sunlight 3 which may be partially blocked or absorbed by the thin-film solar cell assemblies 30, thereby providing enough whole light quantity. The following is the description for the structure of the solar energy greenhouse 1 and the distribution of the thin-film solar cell assemblies 30.

In detail, the main structure 10 has a plurality of bases 11, a plurality of holders 12 and a plurality of supporting boards 13. The bases 11 are fixed on the ground, the holders 12 are fixed on the bases 11 and the supporting boards 13 are fixed on the holders 12. The supporting boards 13 are made of a transparent or opaque material. The transparent material may be glass or plastic etc.

Based on the supporting effect of the main structure 10, the roof structure 20 may be disposed on the main structure 10. The roof structure 20 has a plurality of holders 21 and a plurality of transparent boards 22. The holders 21 of the roof structure 20 are fixed on the holders 12 of the main structure 10, and the transparent boards 22 are fixed on the holder 21. The material of the transparent boards 22 may be glass or plastic etc.

Considering water drain or snow removal, the roof structure 20 is designed to be sloping, wherein the lowest edge of the roof structure 20 is defined as an eave 23 and the top of the roof structure 20 is defined as a ridge 24.

The main structure 10 and the roof structure 20 define an enclosed space together. Proper conditions are created for plants in the enclosed space according to temperature and humidity control methods, so that users (such as farmers) can plant the plants 2 in the main structure 10 and the solar energy greenhouse 1. The appearances of the main structure 10 and the roof structure 20 aren't limited in the drawings, and the main structure 10 and the roof structure 20 may be in other shapes, for example, the roof structure 20 may be vaulted etc.

Further, the supporting boards 13 of the main structure 10 and the transparent boards 22 of the roof structure 20 may be replaced by some transparent cloth with flexibility (not shown).

The thin-film solar cell assemblies 30 are disposed on the roof structure 20, in particular, on the top surface of the roof structure 20. Each thin-film solar cell assembly 30 has a plurality of thin-film solar cells 31 which are arranged in a collinear row along the extending direction of the eave 23 or the ridge 24 of the roof structure 20. The thin-film solar cells 31 may be amorphous silicon thin-film solar cells, microcrystalline thin-film solar cells or nano-crystalline thin-film solar cells. Additionally, each thin-film solar cell assembly 30 may be formed by long-strip-shaped and large-area thin film solar cells 31.

As shown in Fig. 2, the sunlight 3 may be absorbed and converted into electrical energy by the thin-film solar cells 31. Because the thin-film solar cells 31 have a transparent characteristic, partial sunlight 3 will be transmitted into the solar energy greenhouse 1 (that is, below the roof structure 20) through the thin-film solar cells 31 when the residual sunlight 3 radiates on the thin-film solar cells 31.

Under these circumstances, if the roof structure 20 is covered by the thin-film solar cell assemblies 30 completely (not shown), the sunlight 3 entering the solar energy greenhouse 1 is less even if more electrical energy is generated. When the plants 2 aren't radiated by enough sunlight, the rates of growth of the plants 2 are influenced.

To solve this problem, the roof structure 20 cannot be completely covered by the thin-film solar cell assemblies 30, and the unequal gaps are kept between the thin-film solar cell assemblies 30, so that the sunlight 3 directly enters the solar energy greenhouse 1 through the unequal gaps and isn't absorbed or blocked by the thin-film solar cells 31, thereby increasing the amount that the sunlight 3 radiates on the plants 2. Further considering the radiation angle of the sunlight 3 and the position of the plants 2, the unequal gaps between the thin-film solar cell assemblies 30 are unequal so that more sunlight radiates on the plants 2.

It is particularly worth noting that the transparent boards 22 may be observed from the unequal gaps between the thin-film solar cell assemblies 30. In other words, the observed transparent boards 22 may be located below the thin-film solar cell assemblies 30 (especially, the portions of the transparent boards 22 which aren't obstructed or covered by the thin-film solar cell assemblies 30), or may also be located between the thin-film solar cell assemblies 30. That is, the thin-film solar cell assemblies 30 and the transparent boards 22 are arranged alternately from the eave 23 to the ridge 24, and two opposite side faces of the transparent boards 22 respectively contact one side face of one group of thin-film solar cell assemblies 30.

Please refer to Fig. 2 again, when the sun is relatively near the eave 23 and far away from the ridge 24, the sunlight 3 near the ridge 24 cannot radiate on the plants 2, but the main structure 10. On the contrary, the sunlight 3 near the eave 23 can directly radiate on the plants 2. Under these circumstances, to ensure that the whole sunlight 3 can sufficiently radiate on the plants 2, the unequal gap between two adjacent thin-film solar cell assemblies 30 near the eave 23 should be larger than that between two adjacent thin-film solar cell assemblies 30 near the ridge 24.

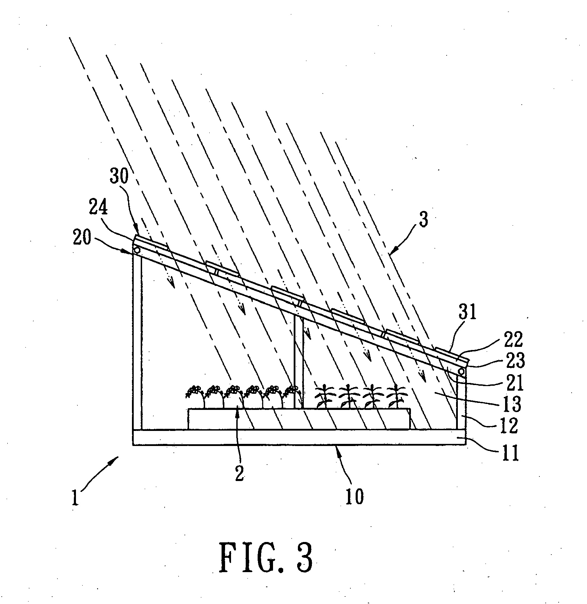

Accordingly, the sunlight 3 near the eave 23 has more chance of directly entering the solar energy greenhouse 1 through the unequal gaps and radiating on the plants 2. Please refer to Fig. 3, when the sun is relatively near the ridge 24 and far away from the eave 23, the sunlight 3 radiates from the upper left of the solar energy greenhouse 1. Under these circumstances, the sunlight 3 near the eave 23 cannot radiate on the plants 2, but the main structure 10. On the contrary, the sunlight 3 near the ridge 24 can directly radiate on the plants 2. So the unequal gap between two adjacent thin-film solar cell assemblies 30 near the ridge 24 should be larger than that between two adjacent thin-film solar cell assemblies 30 near the eave 23.

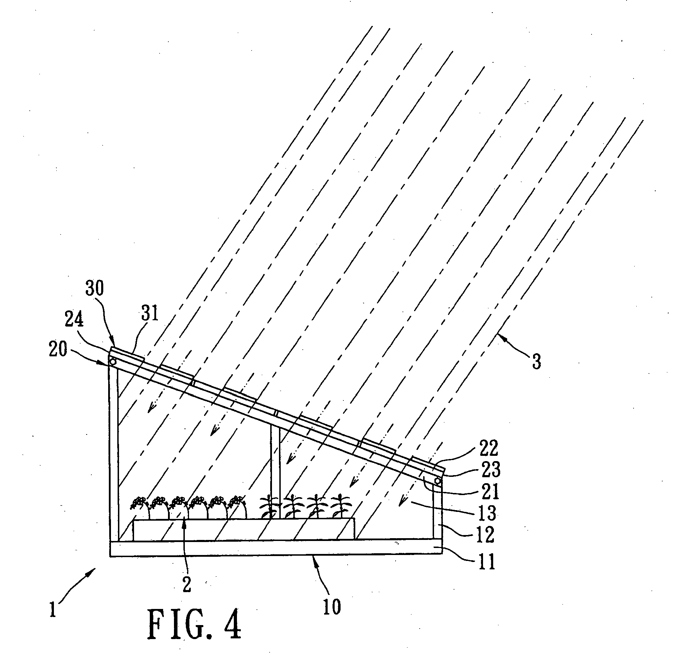

Please refer to Fig. 4, when the sun is relatively near the eave 23 and far away from the ridge 24, and the position of the plants 2 in the solar energy greenhouse 1 is far away from the eave 23, the sunlight 3 near the eave 23 and the ridge 24 is difficult to radiate on the plants 2. In this case, the unequal gaps between the thin-film solar cell assemblies 30 near the eave 23 and the ridge 24 may be smaller, so that the sunlight 3 on the eave 23 and the ridge 24 can radiate on the thin-film solar cell assemblies 30 as possible. As far as the whole of the unequal gaps of the thin-film solar cell assemblies 30 is concerned, the unequal gaps are randomly distributed; however, the unequal gaps are distributed according to the positions of the sunlight 3 and the plants, so that the sunlight 3 can be made full use of.

For adjusting the unequal gaps between the thin-film solar cell assemblies 30 easily, a displacement mechanism is executed on the thin-film solar cell assemblies 30 to adjust the distribution of the unequal gaps between the thin-film solar cell assemblies 30 randomly.

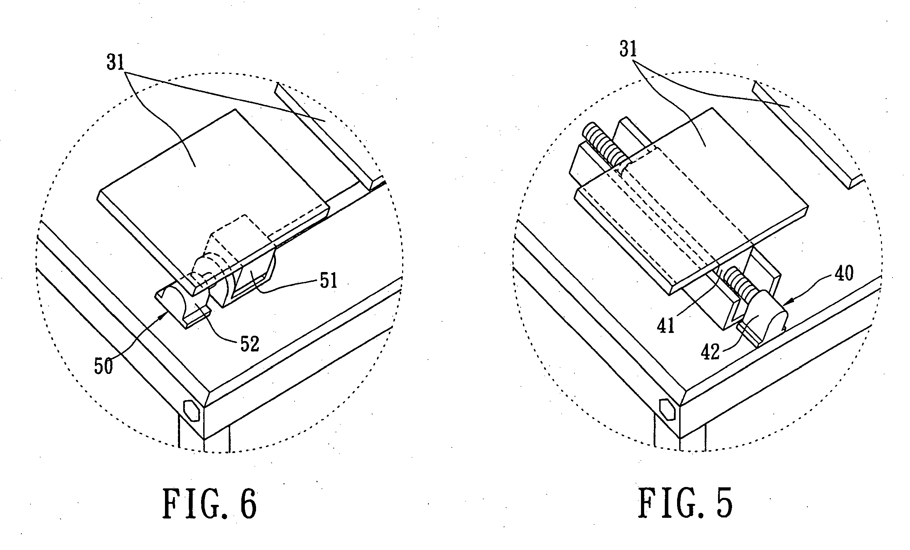

Please refer to Fig. 5, illustrating a second preferred embodiment of the solar energy greenhouse 1 according to the present invention. The difference between the solar energy greenhouse 1 of the second preferred embodiment and the first preferred embodiment is that the solar energy greenhouse 1 of the second preferred embodiment further includes a plurality of moving devices 40, and each thin-film solar cell assembly 30 is disposed on the roof structure 20 via one moving device 40.

The moving device 40 includes at least one sliding mechanism 41 and at least one driver 42. The sliding mechanism 41 is disposed on the top surface of the roof structure 20, the driver 42 is connected with the sliding mechanism 41 and the thin-film solar cell assemblies 30 are disposed on the sliding mechanism 41. The sliding mechanism 41 is one kind of mechanism having one portion can move linearly, for example, a linear sliding rail, etc. The driver 42 provides power to drive the sliding mechanism 41 to move linearly and controls the amount of the linear movement of the sliding mechanism 41. The driver 42 may be a stepper motor or a servo motor etc.

Basing on the moving device 40, the thin-film solar cell assemblies 30 can move on the roof structure 20, and the unequal gaps between the thin-film solar cell assemblies 30 can be changed. When the radiation angle of the sunlight 3 changes with time or regions, or when the position of the plants 2 is changed, the unequal gaps between the thin-film solar cell assemblies 30 may be adjusted accordingly. Thereby, the sunlight 3 can radiate on the plants 2 as possible, and the portion of the sunlight 3 which cannot radiate on the plants 2 can radiate on the thin-film solar cell assemblies 30 as possible.

Please refer to Fig. 6, illustrating a third preferred embodiment of the solar energy greenhouse 1 according to the present invention. The difference between the solar energy greenhouse 1 of the third preferred embodiment and the first preferred embodiment is that the solar energy greenhouse 1 of the third preferred embodiment further includes a plurality of rotating devices 50, and each thin-film solar cell assembly 30 is disposed on the roof structure 20 via one rotating device 50.

Like the moving device 40, the rotating device 50 includes at least one rotating mechanism 51 and at least one driver 52. The rotating mechanism 51 is disposed on the roof structure 20, the driver 52 is connected with the rotating mechanism 51 and the thin-film solar cell assemblies 30 are disposed on the rotating mechanism 51. The rotating mechanism 51 is one kind of mechanism having one portion can move rotatingly, for example, a gear set, etc. The driver 52 may provide power to drive the rotating mechanism 51 to move rotatingly and control the amount of the rotating movement of the rotating mechanism 51. The driver 52 may be a stepper motor or a servo motor.

Based on the rotating device 50, the inclined angle of the thin-film solar cell assemblies 30 can be adjusted in order that the thin-film solar cells 31 can be radiated perpendicularly on by the sunlight 3 as possible. By many known documents, when the sunlight 3 radiates on the thin-film solar cells 31 perpendicularly, the thin-film solar cells 31 can generate more electrical energy. Accordingly, besides the advantages of the first preferred embodiment, the solar energy greenhouse 1 of the third preferred embodiment can ensure that the thin-film solar cells 31 can generate more electrical energy.

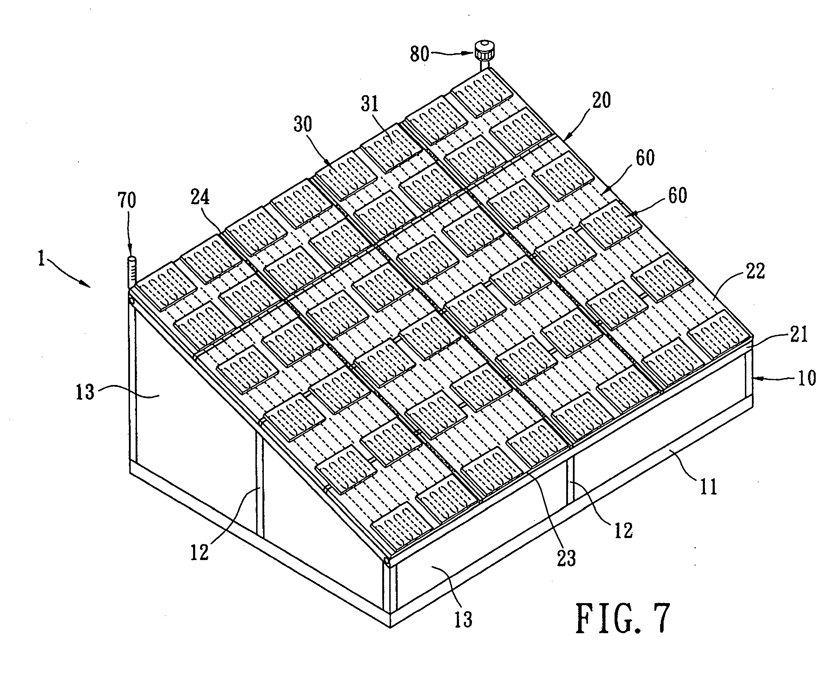

Please refer to Fig. 7, illustrating a fourth preferred embodiment of the solar energy greenhouse 1 according to the present invention. The difference between the solar energy greenhouse 1 of the fourth preferred embodiment and the first preferred embodiment is that the solar energy greenhouse 1 of the fourth preferred embodiment further includes a heating device 60, a temperature sensor 70 and a humidity sensor 80.

The heating device 60 is connected with the thin-film solar cells 31 of the thin-film solar cell assemblies 30 and the transparent boards 22 of the roof structure 20. The heating device 60 may generate heat energy for heating the thin-film solar cells 31 and the transparent boards 22. The heating device 60 may be electrothermal wires and their controller and so on. The temperature sensor 70 and the humidity sensor 80 are respectively connected with the heating device 60. The temperature sensor 70 measures temperature of an external environment and then transmits a temperature signal to the heating device 60. The humidity sensor 80 measures humidity of the external environment and then transmits a humidity signal to the heating device 60.

When the solar energy greenhouse 1 is used in cold regions where it usually snows, snow accumulated on the thin-film solar cells 31 and the transparent boards 22 will affect the radiation of the sunlight 3 on the thin-film solar cells 31 and the plants 2. The solar energy greenhouse 1 with the heating device 60, the temperature sensor 70 and the humidity sensor 80 can solve the problem that the banked snow brings.

When it snows, the external temperature is below zero and the humidity is higher, so the temperature sensor 70 and the humidity sensor 80 respectively measure the abnormal temperature and humidity, and then transmit the temperature signal and the humidity signal to the heating device 60. The heating device 60 starts to work and generates heat energy. After contacting the heating device 60, the snow dissolves into water and flows away. Accordingly, the snow cannot always be accumulated on the thin-film solar cells 31 and the transparent boards 22, which ensures that the sunlight 3 can fully radiate on the thin-film solar cells 31 and the plants 2.

The heating device 60 may only be connected with the thin-film solar cells 31 of the thin-film solar cell assemblies 30 or connected with the transparent boards 22 of the roof structure 20. Moreover, it is not an absolute requirement that each thin-film solar cell 31 or each transparent board 22 is connected with the heating device 60.

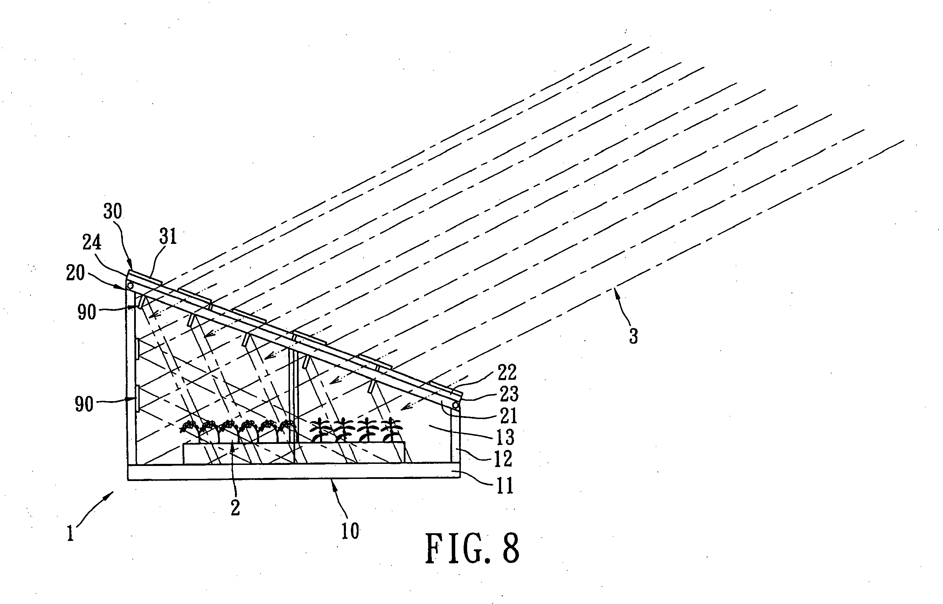

Please refer to Fig. 8, illustrating a fifth preferred embodiment of the solar energy greenhouse 1 according to the present invention. The difference between the solar energy greenhouse 1 of the fifth preferred embodiment and the first preferred embodiment is that the solar energy greenhouse 1 of the fifth preferred embodiment further includes a plurality of reflective mirrors 90 which is disposed on the lower side of the roof structure 20 and the inner side of the main structure 10.

When the sunlight 3 enters the solar energy greenhouse 1, one portion of the sunlight 3 radiates on the reflective mirrors 90 and is reflected, so the forward direction of the sunlight 3 changes towards the plants and the sunlight 3 radiates on the plants 2. Accordingly, the sunlight 3 has more chances of radiating on the plants 2.

The above-mentioned moving device 40, rotating device 50, the heating device 60, the temperature sensor 70, the humidity sensor 80 and the reflective mirrors 90 may be used in the solar energy greenhouse 1, all or partially, and not limited to being used separately. Further, the solar energy greenhouses 1 of the preferred embodiments may all include lighting equipments, watering equipments or air-conditioning equipments etc. (not shown).

Consequently, the solar energy greenhouse 1 of the present invention can absorb the sunlight 3 and convert it into electrical energy for the components of the solar energy greenhouse 1, so as to reduce dependence of the solar energy greenhouse 1 on electrical energy from power plants, thereby reducing electric costs paid to power plants. Additionally, the unequal gaps between the thin-film solar cell assemblies 30 are determined from the radiation angle of the sunlight 3 and the position of the plants 2, so the amount that the sunlight 3 radiates on the thin-film solar cell assemblies 30 and the plants 2 can achieve a better distribution, which improves the amount of electrical energy generated by the thin-film solar cell assemblies 30 and the rates of growth of the plants 2.

What are disclosed above are only the specification and the drawings of the preferred embodiments of the present invention and it is therefore not intended that the present invention be limited to the particular embodiments disclosed. It will be understood by those skilled in the art that various equivalent changes may be made depending on the specification and the drawings of the present invention without departing from the scope of the present invention.

## Claims

1. A solar energy greenhouse, comprising:
a main structure,
a roof structure that is disposed on the main structure and has an eave (23), a ridge (24) and a top surface, and is designed to be sloping;
a plurality of thin-film solar cell assemblies, disposed on the top surface of the roof structure in an unequal gap defined there between; and
a transparent material, observed from the unequal gap between the thin-film solar cell assemblies so that the sunlight enters the solar energy greenhouse through the transparent material directly, wherein the unequal gaps between the thin-film solar cell assemblies are determined from a radiation angle of sunlight.

2. A solar energy greenhouse, comprising:
a main structure;
a roof structure that is disposed on the main structure and has an eave (23), a ridge (24) and a top surface, and is designed to be sloping;
a plurality of thin-film solar cell assemblies, disposed on the top surface of the roof structure in an unequal gap defined there between; and
a transparent material, observed from the unequal gap between the thin-film solar cell assemblies so that the sunlight enters the solar energy greenhouse through the transparent material directly, wherein the unequal gaps between the thin-film solar cell assemblies are determined from a position of a plant.

3. A solar energy greenhouse, comprising:
a main structure,
a roof structure that is disposed on the main structure and has an eave (23), a ridge (24) and a top surface, and is designed to be sloping;
a plurality of thin-film solar cell assemblies, disposed on the top surface of the roof structure in an unequal gap defined there between; and
a transparent material, observed from the unequal gap between the thin-film solar cell assemblies so that the sunlight enters the solar energy greenhouse through the transparent material directly, wherein the unequal gaps between the thin-film solar cell assemblies are distributed randomly.

4. The solar energy greenhouse as claimed in any one of the preceding claims, wherein the unequal gap between two adjacent thin-film solar cell assemblies near the eave is larger than that between two adjacent thin-film solar cell assemblies near the ridge.

5. The solar energy greenhouse as claimed in any one of the preceding claims, wherein the unequal gap between two adjacent thin-film solar cell assemblies near the ridge is larger than that between two adjacent thin-film solar cell assemblies near the eave.

6. The solar energy greenhouse as claimed in any one of the preceding claims, wherein each thin-film solar cell assembly is disposed on the roof structure via a moving device.

7. The solar energy greenhouse as claimed in claim 6, wherein the moving device has at least one sliding mechanism and at least one driver, and the sliding mechanism is disposed on the roof structure, the driver is connected with the sliding mechanism and the corresponding thin-film solar cell assembly is disposed on the sliding mechanism.

8. The solar energy greenhouse as claimed in any one of the preceding claims, wherein each thin-film solar cell assembly is disposed on the roof structure via a rotating device.

9. The solar energy greenhouse as claimed in claim 8, wherein the rotating device has at least one rotating mechanism and at least one driver, and the rotating mechanism is disposed on the roof structure, the driver is connected with the rotating mechanism and the corresponding thin-film solar cell assembly is disposed on the rotating mechanism.

10. The solar energy greenhouse as claimed in any one of the preceding claims, further comprising a heating device connected with the thin-film solar cell assemblies, or the roof structure.

11. The solar energy greenhouse as claimed in claim 10, further comprising a temperature sensor connected with the heating device and transmitting a temperature signal to the heating device.

12. The solar energy greenhouse as claimed in claim 10 or 11, further comprising a humidity sensor connected with the heating device and transmitting a humidity signal to the heating device.

13. The solar energy greenhouse as claimed in any one of the preceding claims, further comprising a plurality of reflective mirrors disposed on a lower side of the roof structure.

14. The solar energy greenhouse as claimed in any one of the preceding claims, further comprising a plurality of reflective mirrors disposed on an inner side of the main structure.

## Patentansprüche

1. Solarenergie-Gewächshaus, aufweisend:
eine Hauptstruktur,
eine Dachstruktur, die auf der Hauptstruktur angeordnet ist und eine Traufe (23), einen Giebel (24) sowie eine Oberseite aufweist und geneigt ausgeführt werden kann;
mehrere Dünnschichtsolarzellanordnungen auf der Oberseite, zwischen denen eine unterschiedliche Zwischenraum-Anordnung definiert ist,
ein durch die unterschiedlichen Zwischenräume zwischen den Dünnschichtsolarzellanordnungen betrachtet transparentes Material, sodass Sonnenlicht in das Solarenergie-Gewächshaus direkt durch das transparente Material eintritt, wobei die unterschiedlichen Zwischenräume zwischen den Dünnschichtsolarzellanordnungen von einem Strahlungswinkel des Sonnenlichts aus bestimmt sind.

2. Solarenergie-Gewächshaus, umfassend:
eine Hauptstruktur,
eine Dachstruktur, die auf der Hauptstruktur angeordnet ist und eine Traufe (23), einen Giebel (24) sowie eine Oberseite aufweist und geneigt ausgeführt werden kann;
mehrere Dünnschichtsolarzellanordnungen auf der Oberseite, zwischen denen eine unterschiedliche Zwischenraum-Anordnung definiert ist,
ein durch die unterschiedlichen Zwischenräume zwischen den Dünnschichtsolarzellanordnungen betrachtet transparentes Material, sodass Sonnenlicht in das Solarenergie-Gewächshaus direkt durch das transparente Material eintritt, wobei die unterschiedlichen Zwischenräume zwischen den Dünnschichtsolarzellanordnungen von einer Position einer Pflanze aus bestimmt sind.

3. Solarenergie-Gewächshaus, aufweisend:
eine Hauptstruktur,
eine Dachstruktur, die auf der Hauptstruktur angeordnet ist und eine Traufe (23), einen Giebel (24) sowie eine Oberseite aufweist und geneigt ausgeführt werden kann;
mehrere Dünnschichtsolarzellanordnungen auf der Oberseite, zwischen denen eine unterschiedliche Zwischenraum-Anordnung definiert ist,
ein durch die unterschiedlichen Zwischenräume zwischen den Dünnschichtsolarzellanordnungen betrachtet transparentes Material, sodass Sonnenlicht in das Solarenergie-Gewächshaus direkt durch das transparente Material eintritt, wobei die unterschiedlichen Zwischenräume zwischen den Dünnschichtsolarzellanordnungen zufällig verteilt sind.

4. Solarenergie-Gewächshaus gemäß einem der vorstehenden Ansprüche, wobei die unterschiedlichen Zwischenraum-Anordnung zwischen zwei benachbarten Dünnschichtsolarzellanordnungen nahe der Traufe größer ist als zwischen zwei benachbarten Dünnschichtsolarzellanordnungen nahe dem Giebel.

5. Solarenergie-Gewächshaus gemäß einem der vorstehenden Ansprüche, wobei die unterschiedlichen Zwischenraum-Anordnung zwischen zwei benachbarten Dünnschichtsolarzellanordnungen nahe dem Giebel größer ist als der zwischen zwei benachbarten Dünnschichtsolarzellanordnungen nahe der Traufe.

6. Solarenergie-Gewächshaus gemäß einem der vorstehenden Ansprüche, wobei jede Dünnschichtsolarzellenanordnung mittels einer Bewegungsvorrichtung an der Dachstruktur angeordnet ist.

7. Solarenergie-Gewächshaus gemäß Anspruch 6, wobei die Bewegungsvorrichtung zumindest einen Gleitmechanismus und zumindest einen Treiber aufweist, wobei der Gleitmechanismus an der Dachstruktur angeordnet ist, der Treiber mit dem Gleitmechanismus verbunden ist und die entsprechende Dünnschichtsolarzellanordnung an dem Gleitmechanismus angeordnet ist.

8. Solarenergie-Gewächshaus gemäß einem der vorstehenden Ansprüche, wobei jede Dünnschichtsolarzellanordnung mittels einer Drehvorrichtung an der Dachstruktur angeordnet ist.

9. Solarenergie-Gewächshaus gemäß Anspruch 8, wobei die Drehvorrichtung zumindest einen Drehmechanismus und zumindest einen Treiber aufweist, wobei der Drehmechanismus an der Dachstruktur angeordnet ist, der Treiber mit dem Rotationsmechanismus verbunden ist und die entsprechende Dünnschichtsolarzellanordnung an dem Drehmechanismus angeordnet ist.

10. Solarenergie-Gewächshaus gemäß einem der vorstehenden Ansprüche, ferner umfassend eine Heizvorrichtung, die mit den Dünnschichtsolarzellanordnungen oder der Dachstruktur verbunden ist.

11. Solarenergie-Gewächshaus gemäß Anspruch 10, ferner umfassend einen Temperatursensor, der mit der Heizvorrichtung verbunden ist und ein Temperatursignal an die Heizvorrichtung übermittelt.

12. Solarenergie-Gewächshaus gemäß Anspruch 10 oder 11, ferner umfassend einen Feuchtigkeitssensor, der mit der Heizvorrichtung verbunden ist und ein Feuchtigkeitssignal zu der Heizvorrichtung übermittelt.

13. Solarenergie-Gewächshaus gemäß einem der vorstehenden Ansprüche, ferner umfassend mehrere reflektierende Spiegel, die an einer Unterseite der Dachstruktur angeordnet sind.

14. Solarenergie-Gewächshaus gemäß einem der vorstehenden Ansprüche, ferner umfassend mehrere reflektierende Spiegel, die an einer Innenseite der Hauptstruktur angeordnet sind.

## Revendications

1. Serre d'énergie solaire, comprenant :
une structure principale,
une structure de toit qui est disposée sur la structure principale et comporte un avant-toit (23), une faîtière (24) et une surface supérieure, et est conçue pour être inclinée ;
une pluralité d'ensembles de piles photovoltaïques à film mince, disposés sur la surface supérieure de la structure de toit avec un espacement inégal entre eux ; et
un matériau transparent, observé à partir de l'espacement inégal entre les ensembles de piles photovoltaïques à film mince de sorte que la lumière du soleil entre dans la serre d'énergie solaire directement à travers le matériau transparent, dans laquelle les espacements inégaux entre les ensembles de piles photovoltaïques à film mince sont déterminés à partir d'un angle de rayonnement de lumière du soleil.

2. Serre d'énergie solaire, comprenant :
une structure principale,
une structure de toit qui est disposée sur la structure principale et comporte un avant-toit (23), une faîtière (24) et une surface supérieure, et est conçue pour être inclinée ;
une pluralité d'ensembles de piles photovoltaïques à film mince, disposés sur la surface supérieure de la structure de toit avec un espacement inégal entre eux ; et
un matériau transparent, observé à partir de l'espacement inégal entre les ensembles de piles photovoltaïques à film mince de sorte que la lumière du soleil entre dans la serre d'énergie solaire directement à travers le matériau transparent, dans laquelle les espacements inégaux entre les ensembles de piles photovoltaïques à film mince sont déterminés à partir d'une position d'une plante.

3. Serre d'énergie solaire, comprenant :
une structure principale,
une structure de toit qui est disposée sur la structure principale et comporte un avant-toit (23), une faîtière (24) et une surface supérieure, et est conçue pour être inclinée ;
une pluralité d'ensembles de piles photovoltaïques à film mince, disposés sur la surface supérieure de la structure de toit avec un espacement inégal entre eux ; et
un matériau transparent, observé à partir de l'espacement inégal entre les ensembles de piles photovoltaïques à film mince de sorte que la lumière du soleil entre dans la serre d'énergie solaire directement à travers le matériau transparent, dans laquelle les espacements inégaux entre les ensembles de piles photovoltaïques à film mince sont répartis aléatoirement.

4. Serre d'énergie solaire selon l'une quelconque des revendications précédentes, dans laquelle l'espacement inégal entre deux ensembles de piles photovoltaïques à film mince adjacents près de l'avant-toit est supérieur à celui entre deux ensembles de piles photovoltaïques à film mince adjacents près de la faîtière.

5. Serre d'énergie solaire selon l'une quelconque des revendications précédentes, dans laquelle l'espacement inégal entre deux ensembles de piles photovoltaïques à film mince adjacents près de la faîtière est supérieur à celui entre deux ensembles de piles photovoltaïques à film mince adjacents près de l'avant-toit.

6. Serre d'énergie solaire selon l'une quelconque des revendications précédentes, dans laquelle chaque ensemble de piles photovoltaïques à film mince est disposé sur la structure de toit par l'intermédiaire d'un dispositif mobile.

7. Serre d'énergie solaire selon la revendication 6, dans laquelle le dispositif mobile comporte au moins un mécanisme coulissant et au moins un dispositif d'entraînement, et le mécanisme coulissant est disposé sur la structure de toit, le dispositif d'entraînement est relié au mécanisme coulissant et l'ensemble de piles photovoltaïques à film mince correspondant est disposé sur le mécanisme coulissant.

8. Serre d'énergie solaire selon l'une quelconque des revendications précédentes, dans laquelle chaque ensemble de piles photovoltaïques à film mince est disposé sur la structure de toit par l'intermédiaire d'un dispositif rotatif.

9. Serre d'énergie solaire selon la revendication 8, dans laquelle le dispositif rotatif comporte au moins un mécanisme de rotation et au moins un dispositif d'entraînement, et le mécanisme de rotation est disposé sur la structure de toit, le dispositif d'entraînement est relié au mécanisme de rotation et l'ensemble de piles photovoltaïques à film mince correspondant est disposé sur le mécanisme de rotation.

10. Serre d'énergie solaire selon l'une quelconque des revendications précédentes, comprenant en outre un dispositif de chauffage relié aux ensembles de piles photovoltaïques à film mince ou à la structure de toit.

11. Serre d'énergie solaire selon la revendication 10, comprenant en outre un capteur de température relié au dispositif de chauffage et transmettant un signal de température au dispositif de chauffage.

12. Serre d'énergie solaire selon la revendication 10 ou 11, comprenant en outre un capteur d'humidité relié au dispositif de chauffage et transmettant un signal d'humidité au dispositif de chauffage.

13. Serre d'énergie solaire selon l'une quelconque des revendications précédentes, comprenant en outre une pluralité de miroirs réfléchissants disposés sur un côté inférieur de la structure de toit.

14. Serre d'énergie solaire selon l'une quelconque des revendications précédentes, comprenant en outre une pluralité de miroirs réfléchissants disposés sur un côté intérieur de la structure principale.
